# EUROPEAN PATENT SPECIFICATION

(11) **EP 3 687 796 B1**
(45) Date of publication and mention of the grant of the patent: **23.07.2025**
(21) Application number: 18861693.2
(22) Date of filing: 27.09.2018
(51) Int. Cl.: B32B 27/08, B32B 37/15, B32B 37/14, B32B 27/30, B29C 48/00, B29C 48/10, B29C 48/495, B29C 48/92, B32B 7/12, B32B 27/16, B32B 27/18, B32B 27/20, B32B 27/28, B32B 27/32, B32B 27/36, B32B 27/40

(54) **MULTILAYER POLYMERIC STRUCTURES**
MEHRSCHICHTIGE POLYMERSTRUKTUREN
STRUCTURES POLYMÈRES MULTICOUCHES

(30) Priority: 27.09.2017 US 201762563890 P
(43) Date of publication of application: 05.08.2020
(73) Proprietor: Trinseo Europe GmbH, 8810 Horgen (CH)
(72) Inventor: CALVIN, Mary, K., Havertown Pennsylvania 19083 (US); BARSOTTI, Robert, J., Newtown Square Pennsylvania 19073 (US); LACOCK, Steven, Perkiomenville Pennsylvania 18074 (US)
(74) Representative: SSM Sandmair
(86) International application number: PCT/US2018/053008
(87) International publication number: WO 2019/067654

(56) References cited:
- WO-A1-2007/064322
- WO-A1-2007/064322
- WO-A1-2008/144171
- WO-A1-2010/006226
- WO-A2-00/37557
- US-A- 6 136 441
- US-A- 6 136 441
- US-A1- 2002 197 449
- US-A1- 2007 009 752
- US-A1- 2007 116 959
- US-A1- 2007 116 959
- US-A1- 2008 318 037
- US-A1- 2015 111 014
- US-A1- 2016 009 910

## Description

### FIELD OF THE INVENTION

A multilayer polymeric composite structure is formed by extrusion, co-extrusion, extrusion-lamination, multi-shot injection molding, compression molding, pultrusion or any other method known in the art. The multilayered composite structure comprises at least one polymer cap layer comprised of acrylic or styrenic or acrylonitrile polymers and at least one polyester inner or substrate layer. Also disclosed are methods of manufacturing and forming the multilayer composite structure to improve and control the level of adhesion between the layers. Optionally, tie layers can also be used to improve and control the level of adhesion between the layers. An optional exterior layer over the cap layer can be comprised of polyvinylidene fluoride (PVDF) polymers and blends. The multilayer composite structure combines the attributes of both polymers - the high UV stability, scratch resistance, and excellent appearance of the polymeric outer cap layer and the strength and impact resistance of the polyester interior layer.

### BACKGROUND OF THE INVENTION

Polyesters, such as PET (polyethylene terephthalate), PEN (polyethylene naphthalate), PBT (polybutylene terephthalate), PETG (glycol modified polyester), including modified polyesters (e.g. by co-polymerization, grafting, addition of fillers, modifiers, or other materials known in the art), and polycarbonates, are known for their rigidity, toughness, impact resistance and strength, but can be limited in weatherability, especially as regards ultraviolet (UV) resistance and therefore are not generally used for outdoor applications. Applications such as in the automotive industry, recreational vehicles; building and construction; outdoor recreational equipment; water sports; pools; lawn and garden equipment; and outdoor structural applications requiring stiffness and strength, such as decking, rails, posts, siding, fencing, structures and window profiles, and outdoor structural applications (windows, siding, decking, railings, shutters); communications such as telephones, radio, TV, cassettes, etc.; power tools; appliances; business machines; toys; furniture; medical devices, in general would require the stiffness, strength and low-flexibility or non-flexible characteristics of these polyesters or polycarbonates. Unfortunately the lack of weather resistance has long been a barrier to using polyester or polycarbonate materials in such applications.

Consequently, it has become a practice in the industry to apply another resinous material over the structural or substrate plastic material to protect the underlying structural material and provide a surface that can withstand abuse associated with the use environment. Such surfacing materials are called "capstocks".

Polymers such as acrylics, styrenics, and acrylonitrile styrene acrylates that have good UV resistance as well as resistance to scratching and have generally excellent surface appearance properties, are generally not as tough as polyesters or polycarbonates. They therefore are attractive candidates to use as capstocks for the high-strength polyesters or polycarbonates. A multilayer structure having a weather-resistant polymer on the outer surface as a capstock, but a high-strength and tough polyester or polycarbonate material on the inside or as the substrate, would seem an attractive solution to the problem of the poor weather resistance capabilities of polyesters and polycarbonates.

There are two significant barriers to forming such composite structures.

The first is the general lack of compatibility between these two types of polymer materials. Polymers, as a class of materials, have a low surface energy so that it is difficult to adhere them other substances, including other polymers. In making a layered structure, if the adhesion between the two layers is not controlled, it leads to two problems. The first is that if the adhesion at the interface is not high enough, the interface between the two materials becomes a weak spot and so the advantage of the strength of the inner layer is mitigated. The other problem generally related to adhesion between the layers in a multilayered structure is that if the adhesion between the layers is not optimized, the physical properties of the structure as a whole are compromised. Too little adhesion and the structure will simply fall apart. Too much adhesion between the layers, depending on the physical properties of the two materials that are bonded together, may result in the structure not having optimum physical properties.

The second barrier to forming good composite structures comprised of more than one layer of different polymer materials is the difference in processing temperatures between the materials. The melting points, and thus the processing temperatures of the polyester or polycarbonate materials, tend to be higher than the optimum processing temperatures of the acrylic, styrenic and acrylonitrile polymers that contribute to the weatherability of the structure.

Therefore, manufacturing and forming such a structure presents a considerable challenge in the area of identifying a processing window to make such structures.

Thus, there is a long-felt and unmet need for multilayered composite structures that combine the weather resistance of acrylics, styrenics, and acrylonitriles with the strength and toughness of polyesters or polycarbonates, as well as for manufacturing methods for such structures.

WO 2008/144171 A1 discloses a multi-layer composite having a functionalized acrylic layer directly adhered to a polymeric substrate without the use of any adhesive. The functionalized acrylic layer may be a capstock or a tie layer. The polymeric substrate is one having some functionality that chemically interacts with the functional groups on the functionalized acrylic, such as polyethylene terephthalate, polycarbonate, polyamides, polyurethanes and polyesters. The functionalized acrylic polymer is adhered to the substrate though a heat and/or pressure process.

WO 00/37557 A2 discloses a capstock polymer composition comprising a blend of a melt extrudable acrylic polymer component; from 10% to 50% by weight of a halogen donor component; a halogen volatilisation component; and a char-inducing component which induces formation of a char upon application of flame to the composition.

WO 2007/064322 A1 discloses a composition of weatherable and semi-weatherable materials that can be injection molded or extruded into sheets or rolls to create a roofing product wherein the roofing product overlaps in order to provide a substantially weatherable covering on a roof. The roofing product has a top layer made of weatherable polymers and multiple substrate layers made of semi-weatherable polymers. A decorative, three dimensional appearing layer of colorants is uniquely applied to the bottom surface of the top layer. The weatherable top layer is preferably an ASA or acrylic-type copolymer.

US 2007/0116959 A1 discloses weatherable multilayer articles. In one of its embodiments a multilayer article comprises: a coating layer comprising a block copolyestercarbonate comprising structural units derived from a 1,3-dihydroxybenzene and an aromatic dicarboxylic acid; a second layer comprising a polymer comprising carbonate structural units; and an adhesive tielayer. In one embodiment, the adhesive tielayer comprises a conjugated diene comprising a member selected from the group consisting of polystyrene-b-poly(isoprene)-b-polystyrene (S-I-S) block copolymers, and a blend of a SI-S block copolymer with a polycarbonate. In another embodiment, the adhesive tielayer comprises a copolymer which has been modified by a polar functionalization agent. In yet another embodiment, the adhesive tielayer comprises a copolymer with structural units derived from an alkenyl aromatic compound and a conjugated diene comprising a member comprises polystyrene-b-poly(ethylene/butylene)-b-polystyrene.

US 6,136,441 A discloses a multilayer plastic composite articles comprising a thermoplastic resin substrate which can be a polycarbonate, an ABS or ASA resin, a polyphenylene ether or polyphenylene ether/polystyrene blend , an polyester or an admixture of polycarbonate with ABS, ASA or polyester and at least one surface layer comprising a cyloaliphatic polyester or cycloaliphatic polyester blend which is adherent to at least one surface of the substrate. Decorative layers can be located between the substrate and the surface layers.

WO 2010/006226 A1 discloses a thermoplastic composition including a combination of a polycarbonate, an impact modifier, an aromatic vinyl copolymer, and a polyester carbonate and/or a polycarbonate polysiloxane copolymer having excellent thermal and mechanical properties as well as good adhesion to both a polymer superstrate and certain types substrates is disclosed. Also disclosed are articles and multilayer films including the tie layer composition.

US 2007/0009752 A1 discloses a multi-layer acrylic composition having at least two impact modified layers. The outer layer is an acrylic layer containing impact modifiers having a particle size of less than 225 nm, and the impact modifiers in the inner thermoplastic layer have a particle size of greater than or equal to 225 nm. The invention also relates to multi-layer composites having the multi-layer acrylic composition on one or both sides. The multi-layer acrylic composition can also include blends of acrylic and fluoropolymers.

US 2002/0197449 A1 discloses an extrusion die having a distributing tool; a profiling nozzle; and at least three melt-flow ducts; a first melt-flow duct is routed around a second melt-flow duct or the distributing tool using a branch and is merged again downstream from the branch; and a third melt-flow duct opens into the second melt-flow duct. The extrusion die is suitable for extrusion of a hollow-chamber profiled panel of a thermoplastic plastic with a layered structure which comprises a top and bottom layer of a first plastic melt; and an intermediate layer of a second plastic melt disposed in an interior of a hollow chamber profile. The first plastic melt is allocated to the first melt-flow duct and to the second melt-flow duct and the second plastic melt is allocated to the third melt-flow duct. During the extrusion the second plastic melt is deposited onto the first plastic melt upstream from or in the region of the branch, and a distribution of the deposited second plastic melt is regulated using the distributing tool. The second melt-flow duct conveying the first plastic melt and the deposited second plastic melt is then merged with the first melt-flow duct in the profiling nozzle, whereupon the first plastic melt from the first melt-flow duct is deposited on the second plastic melt from the second melt flow duct, to sandwich the second plastic melt between two layers of the first plastic melt; and the united plastic melts are shaped to the hollow-chamber profiled panel during ejection from the profiling nozzle.

### SUMMARY OF THE INVENTION

The invention is set out in the appended independent claims. The dependent claims describe advantageous embodiments.

Disclosed is a multilayer composite structure having an outer layer (capstock) comprised of, for example, acrylic polymers, styrenic polymers, or acrylonitrile polymers over a polyester substrate. Also disclosed is the use of an optional exterior layer over the top of the cap or capstock layer. This optional exterior layer may be comprised of polyvinylidene fluoride (PVDF) polymers.

Also disclosed is a multilayer composite structure that can be used in building and construction; outdoor recreational equipment; water sports; pools; marine applications, lawn and garden equipment; and outdoor structural applications such as decking, rails, posts, siding, fencing, structures and window profiles; the automotive industry, recreational vehicles; communications such as telephones, radio, TV, cassettes, etc.; power tools; appliances; business machines; toys; furniture; medical devices, as non-limiting examples of potential uses. Other applications are sheets made from the multilayer composite material that are suitable for thermoforming.

Further disclosed is a process for manufacturing the multilayer composite structure in order to effect good and controlled adhesion between the layers. The process comprises, in general, adapting the processing conditions such that the polymer used as the cap layer or capstock (e.g., acrylic polymers, styrenic polymers, acrylonitrile polymers, polyurethanes, etc., copolymers thereof, and blends thereof as detailed herein) is subjected to as high as practicably possible processing temperature and the polyester or polycarbonate substrate is processed at a temperature as low as practicably possible.

Also disclosed is the optional use of a tie layer to improve the adhesion between any or all of the layers of the multilayer composite structure. Such a tie layer may be part of an already formed layer or may be co-extruded with the other layers of the multilayer composite structure, or may be a separate layer that can be laminated or otherwise disposed between any or all layers of the multilayer composite structure. Suitable tie layers may comprise for instance, a styrene block copolymer, an ethylene-acrylic ester-maleic anhydride copolymer, an ethylene-acrylic ester-glycidyl methacrylate copolymer, an ethylene-acrylic ester polymer, a polyamide, or a polyamide co-polymer.

### DETAILED DESCRIPTION OF THE INVENTION

The invention relates to a multilayer composite structure having an outer layer (capstock) comprised of at least one polymer: acrylic polymers, styrenic polymers, acrylonitrile polymers, polyolefins, polyvinyl chlorides (PVC), polycarbonates (PC), polyurethanes (PU), thermoplastic polyurethanes (TPU), or copolymers thereof, or mixtures thereof are all suitable for use. The outer capstock layer is over a polyester or polycarbonate (PC) inner substrate layer. The multilayer composite structure of the invention may also have an optional exterior layer comprised of polyvinylidene fluoride polymer (PVDF) on the external surface of the outer capstock layer.

The invention also relates to processing conditions to effect optimum adhesion between the outer layer comprised of at least one polymer and the inner substrate layer comprised of polyesters or polycarbonates.

The invention also relates to the use of an optional tie layer to improve the adhesion between the outer capstock and the polyester or polycarbonate substrate underneath. An optional tie layer may also be used in improve the adhesion between the capstock layer and the optional exterior layer. The optional tie layer can be comprised of a styrenic block copolymer, an ethylene-acrylic ester-maleic anhydride copolymer, an ethylene-acrylic ester-glycidyl methacrylate copolymer, an ethylene-acrylic ester copolymer, a polyamide or a polyamide copolymer.

Unless otherwise indicated, all percentages herein are weight percentages, and all molecular weights are weight average molecular weights measured by gel permeation chromatography (GPC).

"Polymer" as used herein, is meant to include organic molecules with a weight average molecular weight higher than 20,000 g/mol, preferably higher than 50,000 g/mol, as measured by gel permeation chromatography.

### Outer Capstock or Cap Layer

According to the invention the multilayer composite structure comprises at least one polymer-based capstock layer, wherein the at least one polymer-based capstock layer comprises at least one polymer being an acrylic polymer which is a copolymer of methyl methacrylate and 2-16 percent by weight of one or more C₁₋₄ acrylates.

Further disclosed thermoplastics useful as a cap layer over a substrate, include, but are not limited to, acrylic polymers, styrenic polymers, acrylonitrile polymers, polyolefins, polyvinyl chlorides (PVC), polycarbonates (PC), polyurethanes (PU), thermoplastic polyurethanes (TPU), or copolymers thereof, or mixtures thereof.

Styrenic polymers, as used herein, include but are not limited to, polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-acrylonitrile-butadiene-styrene (MABS) copolymers, styrene-butadiene copolymers (SB), styrene-butadiene-styrene block (SBS) copolymers and their partially or fully hydrogenated derivatives, styrene-isoprene copolymers, styrene-isoprene-styrene (SIS) block copolymers and their partially or fully hydrogenated derivatives, styrene-(meth)acrylate copolymers such as styrene-methyl methacrylate copolymers (S/MMA), and mixtures thereof. A preferred styrenic polymer is ASA. Styrenic copolymers of the invention have a styrene monomer content of at least 10 percent by weight, preferably at least 25 percent by weight. The polymers can be manufactured by any means known in the art, including emulsion polymerization, solution polymerization, and suspension polymerization. Styrenic copolymers have a styrene content of at least 10 percent by weight, preferably at least 25 percent by weight.

HIPS as used herein is meant to include polystyrene compounds that contain polybutadiene rubber.

The styrenic polymers can also be blended with other polymers to form compatible blends. Non-limiting examples include ASA blended with PVC, and SAN blended with PMMA.

Disclosed acrylic polymers, include homopolymers, copolymers and terpolymers comprising alkyl (meth)acrylates.

The disclosed alkyl methacrylate monomer is preferably methyl methacrylate, which may make up from 60 to 100 of the monomer mixture. Zero to 40 percent of other acrylate, methacrylate, and/or other vinyl monomers may also be present in the monomer mixture. Other methacrylate, acrylate, and other vinyl monomers, e.g. vinyl cyanide monomers or acrylonitrile useful in the monomer mixture include, but are not limited to methyl acrylate, ethyl acrylate and ethyl methacrylate, butyl acrylate and butyl methacrylate, iso-octyl methacrylate and acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers, styrene and its derivatives, acrylonitrile, vinyl cyanides. Small levels of multifunctional monomers as crosslinking agents may also be used. According to the invention the acrylic polymer is a copolymer of methyl methacrylate and 2 - 16 percent of one or more C₁₋₄ acrylates.

Acrylonitrile polymers can also be used as the capstock layer. Acrylonitrile polymers, as used herein include but are not limited to, homopolymers, copolymers or terpolymers comprising acrylonitrile or methacrylonitrile and various other monomers. About 20 to 85 percent by weight of the copolymer is acrylonitrile or methacrylonitrile and about 80 to15 percent of the other monomers can be one or more of styrene monomer, or derivatives of styrene monomer or, butadiene monomer, or alkyl methacrylate monomers. Non-limiting examples include poly(styrene-co-acrylonitrile) (SAN), poly(styrene-co-acrylonitrile-co-butadiene) (ABS), or acrylic-styrene-acrylonitrile (ASA.)

In one embodiment, the capstock layer polymer has a weight average molecular weight of between 50,000 and 500,000 g/mol, and preferably from 75,000 and 150,000 g/mol, as measured by gel permeation chromatography (GPC). The molecular weight distribution of the acrylic polymer may be monomodal, or multimodal with a polydispersity index greater than 1.5.

The acrylic polymers can also be blended with other polymers to form blends to modify their properties. The acrylic polymers may also comprise additives to modify their properties. Examples include, but are not limited to acrylics comprising impact modifiers, fillers, and other additives. Recycled acrylic polymers or styrenic polymers of the type listed above are also suitable in the practice of the invention. Embodiments may also include blends in any proportion of the polymers listed above, especially the acrylic polymers, styrenic polymers and acrylonitrile polymers listed above.

The polymers utilized in the multilayer composite structure of the invention can be manufactured by any means known in the art, including but not limited to, emulsion polymerization, solution polymerization, suspension polymerization.

In one embodiment, the capstock polymers described herein have a weight average molecular weight of between 50,000 and 500,000 g/mol, and preferably from 75,000 and 150,000 g/mol, as measured by gel permeation chromatography (GPC). The molecular weight distribution of the capstock polymer may be monomodal, or multimodal with a polydispersity index greater than 1.5.

Disclosed materials for the capstock polymer are styrenic polymers (including SAN, ABS, MABS, ASA, HIPS) and acrylic polymers, copolymers, terpolymers, blends and modified styrenic polymers or acrylic polymers.

It is also disclosed that thermoset (crosslinked) resin capstocks can be used as the outer cap layer.

The invention can also be practiced using recycled versions of any of the polymers recited herein as the capstock layer.

The invention excludes copolymers of methyl methacrylate monomer with any of acrylic acid, methacrylic acid and anhydride comonomers as the outer capstock layer.

The outer capstock layer of the multilayer composite structure can have a thickness from 0.0254 mm (1 mil) to 2.54 mm (100 mil) thick, preferably from 0.0762 to 0.635 mm (3 to 25 mil) thick and more preferably from 0.1016 to 0.508 mm (4 to 20 mil) thick.

### Substrate or Inner Layer

Polyesters useful as the substrate or inner layer of the composite include but are not limited to polyethylene terephthalate (PET), polyethylene naphthalate (PEN), polybutylene terephthalate (PBT), glycol modified polyester (PETG), or polycarbonate (PC). Modified polyesters, such as those blended with other polymers, including polymers such as styrenic polymers and acrylic polymers as detailed above are also useful. Polyesters with other co-monomers, including, but not limited to examples such as isophthalic acid, diethylene glycol and cyclohexane dimethanol (above, in PETG) are also contemplated as substrate materials and can be included in the multilayer composite structure disclosed herein.

Non-limiting examples of suitable additives to modify the polyesters or other substrate materials include but are not limited to ethylene-acrylic ester-maleic anhydride copolymer, ethylene-acrylic ester-glycidyl methacrylate copolymer or ethylene-acrylic ester copolymer and mixtures thereof. Impact modifiers added to the substrate layer are also envisaged, including, but not limited to polybutadiene rubber.

Recycled polyesters or polycarbonates or recycled versions of any of the suitable substrate materials described herein are also suitable as the inner layer or substrate.

The substrate layer can have a thickness from 0.254 mm (10 mil) to more than 10 cm, preferably from 1.27 mm (50 mil) to more than 10 cm, and more preferably from 2.54 mm (100 mil) to more than 10 cm.

### Optional Exterior Layer

The multilayer composite structure may also comprise an optional exterior layer over the top or on an external face of the outer capstock or cap layer of the composite structure. This optional exterior layer comprises a fluoropolymer.

The fluoropolymer optional exterior layer may either be a layer comprising a majority, and preferably 100 percent fluoropolymer, or may be a blend of a thermoplastic matrix with fluoropolymer at a level of from 5 to 60 weight percent, based on the total weight of all polymers. Especially useful thermoplastic matrices for this optional exterior layer include any of the polymer materials disclosed herein as suitable for the capstock layer of the multilayered composite - acrylic polymers, and styrenic polymers, especially styrenic copolymers such as acrylonitrile/styrene/acrylate (ASA), acrylonitrile/butadiene/styrene (ABS) and styrene/acrylonitrile (SAN). While the fluoropolymer may be any fluoropolymer, thermoplastic fluoropolymers, such as polymers and copolymers of polyvinylidene fluoride are especially useful. The use of fluoropolymers in the optional exterior layer of the multilayer composite improves flame retardancy, such that the article made from the multilayered composite stricter disclosed herein may achieve an NFPA "A" or "B" rating when tested by ASTM E84 flame test.

Useful fluoropolymers for use as the optional exterior layer of the multilayered composite structure of the invention, include, but are not limited to polyvinylidene fluoride (PVDF), ethylene tetrafluoroethylene (ETFE) polymers, terpolymers of ethylene with tetrafluoroethylene and hexafluoropropylene (EFEP), terpolymers of tetrafluoroethylene-hexafluoropropylene-vinyl fluoride (THV), polyvinylfluoride (PVF), copolymers of vinyl fluoride, and blends of PVDF with functionalized or unfunctionalized polymethyl methacrylate polymers and copolymers. The fluoropolymers may be functionalized or unfunctionalized, and could be homopolymers or copolymers - preferably copolymers with other fluorine monomers including vinyl fluoride; vinylidene fluoride (VDF); trifluoroethylene (VF3); chlorotrifluoroethylene (CTFE); 1,2-difluoroethylene; tetrafluoro ethylene (TFE); hexafluoropropylene (HFP); perfluoro(alkyl vinyl) ethers, such as perfluoro(methyl vinyl) ether (PMVE), perfluoro(ethyl vinyl) ether (PEVE) and perfluoro(propyl vinyl) ether (PPVE); perfluoro(l,3-dioxole); perfluoro(2,2-dimethyl-1,3-dioxole) (PDD), and blends thereof.

In one embodiment of the invention, the fluoropolymer is a copolymer of vinylidene fluoride and hexafluoropropylene.

In one embodiment of the invention, the blend of the polymer used in the capstock layer and fluoropolymer could be an intimate blend of the two polymers, such as in an acrylic modified fluoropolymer (AMF) in which (meth)acrylate monomers are polymerized in the presence of a fluoropolymer seed. The AMF could be coated or laminated onto a substrate polymer, either at the factory or in the field, to produce a flame-retardant barrier layer.

This optional exterior layer may contain more than 50 weight percent of fluoropolymer, preferably more than 60 weight percent fluoropolymer, more preferably more than 75 weight percent fluoropolymer, and up to and including 100 weight percent of fluoropolymer, based on the weight of polymer in the optional exterior layer. The fluoropolymer-rich layer may contain from 0 to 49 weight percent, preferably 1 to 35 weight percent, and more preferably 5 to 30 weight percent of one or more acrylic polymers. In a preferred embodiment, the fluoropolymer is a polyvinylidene fluoride homopolymer, or a copolymer of 70-99 weight percent of vinylidene fluoride units and 1 to 30 weight percent of hexafluoropropylene units. The optional exterior fluoropolymer-rich layer has a thickness of from 0.00635 to 0.254 mm (0.25 to 10 mil), preferably from 0.00762 to 0.0762 mm (0.3 to 3 mil) and more preferably from 0.0508 to 0.127 mm (2 mil to 5 mil).

### Optional Tie Layer

The multilayer composite structure may also comprise an optional tie layer to enhance adhesion between the outer polymer-based capstock layer and the inner polyester-based substrate layer. Materials useful as a tie layer include but are not limited to functionalized polyolefins such as ethylene/acrylic ester/maleic anhydride copolymer and ethylene/acrylic acid/glycidyl methacrylate copolymer; styrenic copolymers and styrenic block copolymers; polyamides, or polyamide copolymers.

This optional tie layer may also be utilized to enhance adhesion between the outer polymer-based capstock layer and the optional fluoropolymer-based exterior layer.

The optional tie layer can have, for example, a thickness of from 0.00635 mm to 0.254 mm (0.25 mil to 10 mil).

### Polymer Blends to Improve Adhesion

Embodiments of the invention also comprise a polyester such as PET, PEB, PBT, or PLA blended into the polymer-based outer capstock layer.

Another embodiment comprises a polymer that has affinity to the polymer-based outer capstock layer blended into the polyester-based or polycarbonate-based inner substrate layer in order to enhance adhesion between the layers. Non-limiting examples of such polymers include: acrylonitrile styrene acrylate (ASA), polyvinylidene fluoride (PVDF), polylactic acid (PLA), polyvinyl chloride (PVC), poly(butyl acrylate) (PBA), acrylonitrile butadiene styrene (ABS), high-impact polystyrene (HIPS), and polystyrene.

### Additives

Any additives that are known in the art are suitable for use in the any or all of the layers of the multilayer composite structure described herein. Non-limiting examples of such additives include fillers, surface modifying additives, antioxidants, UV screens and processing aids.

Non-limiting examples of suitable fillers or surface modifying ingredients include calcium carbonate, gypsum and flax fibers. Coloring agents may be used in any of the polymers and layers described herein. The above polymer-based layers, polyolefin-based layers and tie layers may contain one or more impact modifiers, fillers or fibers, or other additives of the type used in the polymer art. Examples of impact modifiers include, but are not limited to, core-shell particles and block or graft copolymers. Examples of additives include, for example, UV light inhibitors or stabilizers, lubricant agents, heat stabilizers, flame retardants, synergists, pigments and other coloring agents. Examples of fillers employed in a typical compounded polymer blend according to the present invention include talc, calcium carbonate, mica, matting agents, wollastonite, dolomite, glass fibers, boron fibers, carbon fibers, carbon blacks, pigments such as titanium dioxide, or mixtures thereof. Other polymer additives could include polycarbonates, polyurethanes, polysulfones, polyamides, polyolefin including copolymers and terpolymers based on these polymers, and including linear, branched, block, and grafted polymer structures. Examples of matting agents include, but are not limited to, cross-linked polymer particles of various geometries. The amount of filler and additives included in the polymer compositions of each layer may vary from about 0.01% to about 70% of the combined weight of polymer, additives and filler. Generally, amounts from about 5% to about 45%, from about 10% to about 40%, are included.

The fillers may be treated with coupling agents to improve the bond between the fillers to the resin. For example, the fillers can be treated with materials such as fatty acids (e.g., stearic acid), silanes, maleated polypropylene, etc. The amount of coupling agent used is an amount effective to improve the bond between the fillers with the resin. Also suitable to use in any of the layers of the composites described herein include acrylic beads or ground acrylic. Standard acrylic polymers are suitable for either beads or ground, and especially preferred are crosslinked versions of acrylic beads or ground acrylics.

Antioxidants as are commonly known in the art are suitable to add to the polymers described herein at any suitable level. Non-limiting examples include sterically hindered phenols, organophosphites and amines.

Additives as are commonly known in the art to improve and enhance UV stability are suitable to use at any suitable level in any of the layers for the multilayer composite structure. Non-limiting examples include hindered amine light stabilizers (HALS), benzotriazoles, triazines, benzophenones, and cyanoacrylates.

### Surface Treatments

Surface treatments such as are commonly known in the art to improve adhesion to polymers may also be utilized in the practice of this invention. Non-limiting examples include corona treatment or plasma treatment or chemical treatment or the use of solvents and cleansing agents to prepare surfaces of the individual layers to be adhered together to form the multilayer composite structure.

### Processing and Manufacturing Methods

Methods of making such multilayer composite structures may be typical such methods as are known in the industry, although the invention comprises certain methods that were discovered to surprisingly improve the adhesion between the layers of the composite structure, without compromising properties of each separate polymer layer.

In general, the inventive processing conditions comprise subjecting the polymer that comprises the cap layer to temperatures that are higher than those that are usually employed while processing the capstock polymer. Such capstock processing temperature may be either completely above the usual processing range for the selected capstock polymer or may be near or at the upper range of recommended processing temperatures for the capstock polymer. The inventive processing conditions may also comprise subjecting the polymer that comprises the substrate layer to temperatures that are lower than those that are usually employed while processing the substrate polymer. Such substrate processing temperature may be either completely below the usual processing range for the selected substrate polymer or may be near or at the lower range of recommended processing temperatures for the substrate polymer.

The following is a non-limiting list of common polymer processing methods that may be employed in making the multilayer composite structures of the present invention.

Co-extrusion is a process in which two or more different molten polymeric compositions are simultaneously extruded through a feedblock die or, alternatively, through a multi-manifold die, to form a laminar structure with different functional properties in each layer. A feedblock die can be used to feed a multi-manifold die in a single process, to provide excellent flexibility in the manufacture of the multilayer structures. Lamination is the process of bonding together prefabricated sheet layers, or prefabricated and extruded sheet layers, by the use of adhesives, and/or by a combination of heat and pressure. Alternatively, hot melt lamination or thermal lamination brings two or more molten polymer layers together outside the extrusion die, usually at a nip roll or at the top roll of a roll stack. Other non-limiting examples of polymer processes include: extrusion-lamination wherein two separate layers are extruded in parallel and hot rolled together in a continuous process, insert molding, multi-shot injection molding, compression molding, pultrusion, multilayer blown film, thermoforming, vacuum forming, injection blow molding, blow molding, and rotamolding.

The multilayer composite structure of the invention can contain two or more layers, with the choice of the number and composition of the layers being adjusted to meet the needs of the end-use application. The structure can be made by any method known to the art. This includes separate formation of the layers followed by lamination, co-extrusion of all layers or a combination of co-extrusion and lamination or any of the processes mentioned herein.

The multilayer composite material described herein can be manufactured as a generally planar structure. The generally planar multilayer composite structure of the present invention may be further shaped into a three-dimensional part by any suitable method. Thermoforming, for example, is the process of heating a plastic material in sheet form to its particular processing temperature and forming the hot and flexible material against the contours of a mold by mechanical or pneumatic means.

The multilayer composite structure can have any given geometry, including but not limited to, a flat sheet, a rod, or a profile. The multilayer composite structure exhibits excellent structural integrity, excellent surface appearance, high impact strength, high scratch resistance, and excellent resistance to UV rays.

The multilayer composite structure is intended in general to be thick enough to be a rigid, or fairly rigid, or non-flexible, or low-flexibility structure. The multilayer composite material can be as thick as 4 cm, or even thicker if needed for a particular application. Therefore, the multilayer composite structure is suitable for structural purposes, such as for example exterior siding, decking material, roofing material, shower inserts, kitchen counters, furniture for outside or inside use, or other such non-limiting uses as are well-known in the art.

In the multilayered composite structure of this invention, the polyester inner substrate layer is preferably from 0.254 mm (10 mil) to more than 10 cm thick, preferably from 1.27 mm (50 mil) to more than 10 cm thick, and more preferably from 2.54 mm (100 mil) to more than 10 cm thick. The outer capstock polymer layer of the multilayered structure is preferably from 0.0254 to 2.54 mm (1 mil to 100 mil) thick, preferably from 0.0762 to 0.635 mm (3 mil to 25 mil) thick and more preferably from 0.1016 to 0.508 mm (4 mil to 20 mil) thick. The optional tie layer of the multilayer composite structure is preferably 0.00635 to 0.254 mm (0.25 mil to 10 mil) thick. The optional exterior fluoropolymer-rich layer of the multilayered composite structure may have a thickness, for example, of from 0.00635 to 0.254 mm (0.25 to 10 mil), preferably from 0.00762 to 0.0762 (0.3 to 3 mil) and more preferably from 0.0508 to 0.127 mm (2 mil to 5 mil).

In one embodiment, the multilayer composite structure of the invention comprises at least one capstock polymer outer layer as described above and at least one polyester-based inner substrate layer that is in direct contact with the outer capstock layer. In another embodiment, the multilayer composite structure comprises three layers in which the inner polyester-based substrate layer is in direct contact with two outer polymer capstock layers, wherein one of the capstock layers in on one side of the substrate layer and the other capstock layer is on the other side of the substrate layer.

In still another embodiment, the multilayer composite structure further comprises at least one tie layer disposed between the outer capstock polymer layer and the inner polyester-based substrate layer.

In one embodiment, the multilayer structure of the invention contains two or more polymer layers, and one or more tie layers, such as a five- layer structure of capstock polymer/tie layer/polyester-based polymer/tie layer/capstock polymer. A four-layer structure is also contemplated: capstock polymer/tie layer/polyester-based polymer/capstock polymer.

In a structure in which multiple capstock polymer layers and/or multiple tie layers are used in layers non-adjacent to each other, each of the polymer-based layers and tie layers can be of the same or of different compositions, though in a preferred embodiment each of the multiple polymer-based layers are the same and each of the multiple tie layers are the same. In another embodiment, the tie layer may be comprised of two or more tie layers directly in contact with each other.

In addition, any of the multilayer composite structures disclosed herein may further comprise a fluoropolymer-rich exterior layer over an external surface of the polymer capstock or cap layer or layers. Additionally, a tie layer, such as described herein, may be optionally employed to enhance the adhesion between the external surface of capstock polymer layer and the fluoropolymer-rich exterior layer.

### Examples

### Example 1- compression molding:

Four Arkema acrylic products (Solarkote^{®} A200, Solarkote^{®} P600, Solarkote^{®}H 300, and Plexiglas^{™} V920) were compression molded in a 15 cm X 15 cm (6 inch X 6 inch) Carver press with a PET polyester resin (DuraPET from Poly Visions). After experimenting with various processing conditions in order to optimize the adhesion between the two different polymer layers, a two-step process was identified as resulting in the best adhesion between the polyester and the acrylic, wherein the polyester layer was made first at a higher temperature and then the acrylic layer was molded on top. Surprisingly, the best adhesion was obtained by processing the acrylic layer at a temperature approximately 10 °C (50°F) higher than is typical for acrylic resins, with no apparent degradation in the quality of the acrylic layer. The following process produced the best adhesion between the acrylic and the polyester layers:
1) Plaques of PET were molded first at 288 °C (550°F). Pressure of 5,000 psi was applied for one minute then 10,000 psi was applied for four minutes.
2) The temperature of the platens was lowered to 232 °C (450°F) and the acrylic resin was molded on the top of the PET layer. Pressure of 5,000 psi was applied for one minute then 10,000 psi was applied for four minutes.
The plaques were then cooled in a separate cooling press (cooled with ambient temperature water) at 5000 psi pressure as they cooled.

These samples were evaluated for adhesion through "Bend-Snap-Peel" testing, in which a part is bent until the acrylic layer breaks ("snaps") and the two materials separated ("peeled").

This type of adhesion evaluation is summarized as follows:

### Delamination after snapping

First the strip was bent until the acrylic cap layer snapped. Holding the still bent sample up and analyzing it from the side, it was noted if the acrylic cap separated from substrate layer when snapped in tension. 'Y' means the cap layer began to peel upward away from the substrate layer and 'N' means the cap layer did not separate from the substrate layer.

### Twist (T test)

After bending the sample and snapping the cap layer, the sample was flattened out. The sample was then rotated in opposite directions to simulate torque. If no delamination occurred, or only a very minor amount, it was listed as the best (3). The worst (1) was defined as significant delamination. A (2) meant the corner of the 1" wide strip delaminated.

### Peel Strength

Peel strength was evaluated qualitatively on a scale from 1-3, with 3 being the best.

Using the Bend-Snap-Peel protocol and evaluating the samples made with the optimizing processing conditions, the Plexiglas^{™} V920 had the best adhesion to PET, followed by Solarkote^{®} A200, P600, and H300, but all were acceptable. Parts that were made using the standard conditions of a cooler temperature for the acrylic layer immediately fell apart and could not be tested.

### Example 2 - lamination of extruded sheets

PET sheet was extruded and laminated with extruded sheets made from acrylic polymers available from Arkema: Solarkote^{®} A200, Solarkote^{®} P600, Solarkote^{®} H300, and the Solarkote^{®} T system. Two grades of polyester were tested, both available from Polyvisions: DuraPET 1220 and DuraPET 1220 PCR. The "PCR" grade is made from a recycled resin, but is otherwise similar to the standard grade.

Solarkote^{®} T is designed to adhere acrylic to thermoplastic polyolefins (TPO) and consists of an acrylic capstock layer with a styrenic copolymer tie layer underneath. The tie layer is commercially known as Tacryl^{®}, available from Arkema.

All of the composite structures made by lamination had three layers: an inner substrate layer of the PET resin and two outer capstock layers of the acrylic resin or the acrylic/tie layer system. In the case of the acrylic tie layer system, the styrenic block copolymer tie layer was oriented in all cases to be adjacent to the PET inner substrate layer.

A hot roller laminator was used to manufacture the composite multilayer sheets, (except for the multilayer sheets made with the tie layer). The roll temperature of the laminator was set to 177 °C (350 °F). Various numbers of passes and roll speeds were used in order to identify the lamination conditions for the best adhesion between the layers. The composite structures were laminated between Kapton^{®} sheets (American Film). Three samples were created for each material combination to undergo peel strength testing.

The samples made with the tie layer were compression laminated on a press, without going through the rollers, however, the temperature was likewise set at 177 °C (350 °F) and the peel strength was measured and compared to the samples that were hot roller laminated.

The peel strength was measured on an Instron 4202 Universal Testing Machine at 1 in/min.

The conditions used for lamination and the peel testing results of the multilayer composite structures is shown in Table 1.

**Table 1. Summary of lamination conditions used to generate multilayer composite structures and peel testing results**

| **Materials** | **Number of Passes** | **speed** | **cooling** | **PET layer doubled for higher pressure** | **Plaques added for higher pressure** | **Peel strength, Nm (lbf/inch)** |
|---|---|---|---|---|---|---|
| | | | | | | **at 2.54 cm /min (1"/min)** |
| Solarkote A200 (0.254 mm (10 mil)) | 6 | 3 | no | no | no | 0.02 ± 0.001 (0.2 ± 0.01) |
| DuraPET 1220 PCR (12 mil) | | | | | | |
| Solarkote A200 (0.254 mm (10 mil)) | 10 | 3 | yes | yes | no | 0.02 ± 0.001 (0.2 ± 0.01) |
| DuraPET 1220 PCR (0.3048 mm (12 mil)) | | | | | | |
| Solarkote H300 (0.889 mm (35mil)) | 10 | 3 | yes | no | yes | easily pulled apart |
| DuraPET 1220 PCR (0.3048 mm (12 mil)) | | | | | | |
| Solarkote P600 (0.3048 mm (12 mil)) | 10 | 3 | yes | no | no | 0.19 ± 0.058 (1.70 ± 0.52) |
| DuraPET 1220 PCR (0.3048 mm (12 mil)) | | | | | | |
| Solarkote A200 (0.3048 mm (12 mil)) | 10 | 3 | yes | yes | yes | 0.21 ± 0.008 (1.85 ± 0.07) |
| DuraPET 1220 (0.3048 mm (12 mil)) | | | | | | |
| Solarkote H300 (0.889 mm (35 mil)) | 10 | 3 | yes | yes | yes | easily pulled apart |
| DuraPET 1220 (0.3048 mm (12 mil)) | | | | | | |
| Solarkote P600 (0.3048 mm (12 mil)) | 10 | 4 | yes | yes | yes | 0.019 ± 0.006 (0.169 ± 0.05) |
| DuraPET 1220 0.3048 mm (12 mil)) | | | | | | |
| Solarkote T^{®} | - | - | - | - | - | 0.240 (2.12) |
| 0.0762 mm (3 mil) acrylic, | | | | | | |
| 0.0762 mm (3 mil) tie layer | | | | | | |
| DuraPET 1220 0.3048 mm (12mil) | | | | | | |
| Solarkote T^{®} 0.0762 mm (3 mil) acrylic, | - | - | - | - | - | 0.159 (1.41) |
| Tacryl^{®} tie layer 0.0762 mm (3 mil) | | | | | | |
| DuraPET 1220 PCR 0.3048 mm (12 mil) | | | | | | |

Both the Solarkote^{®}200 and P600 were successfully tested at a rate of 2,54 cm/min (1 inch/min), Solarkote^{®} P600 had an improved peel strength compared to Solarkote^{®} A200, which was opposite of the compression molding results.

In order to determine the effect of a tie layer on adhesion, the Solarkote^{®} T (Arkema) system was evaluated and results are shown in Table 1, above. Solarkote^{®} T is designed to adhere acrylic to thermoplastic olefins (TPO) and consists of an acrylic cap layer with a styrenic copolymer tie layer underneath (the tie layer is commercially known as Tacryl^{®}). Bi-layer composite structures of this system were laminated over PET and the peel strength was evaluated. The use of a tie layer system made it possible to improve the peel strength to approximately 30% over the system without the tie layer, even using simple compression lamination without the use of the hot roller lamination system.

### Example 3 - co-extrusion:

Two-layer composite samples were manufactured on a Davis Standard co-extrusion line with a coat hanger die and dual manifold. A 1.25" single screw extruder was used for the polyester substrate layer (various grades of DuraPET) and a 1" single screw extruder was used for the acrylic capstocks (Solorkote^{®} A200 or Mi7^{®} - an impact modified acrylic resin from Arkema) layer. The barrel temperatures of the two extruders on the co-extrusion line were varied for each material in order to effect adhesion between the layers of the polyester substrate and the acrylic capstock layer. The standard barrel temperatures for each material are shown in Table 2, along with the temperatures that were determined to result in the best adhesion between the layers. The temperatures of both layers had to be significantly altered, both to promote adhesion and also to extrude a good-quality two-layer composite material.

Surprisingly, the best quality composite and the best adhesion between the layers were achieved by not only raising the temperature profile of the extruder for the acrylic, but also lowering the temperature of the extruder for the polyester layer.

**Table 2: Temperature profiles on screws for co-extrusion: standard and varied for best adhesion between the layers**

| **Zone Temperature** | **Cap Acrylic standard** | **Cap Acrylic improved adhesion** | **Substrate DuraPET Standard** | **Substrate DuraPET improved Adhesion** |
|---|---|---|---|---|
| **1 °C (°F)** | 193 (380) | 224 (435) | 257 (495) | 238 (460) |
| **2 °C (°F)** | 204 (400) | 232 (450) | 260 (500) | 260 (500) |
| **3 °C (°F)** | 216 (420) | 235 (455) | 271 (520) | 271 (520) |
| **4 °C (°F)** | -- | 238 (460) | -- | -- |
| **Clamp Ring °C (°F)** | 221 (430) | 238 (460) | 277 (530) | 266 (510) |
| **Adapter °C (°F)** | 221 (430) | 238 (460) | 277 (530) | 260 (500) |
| **Melt Temperature °C (°F)** | ~204 (~400) | ~232 (~450) | ~293 (~560) | ~277 (~530) |

The die, clamp ring and adapter temperatures also had a significant effect on the quality of the adhesion between the layers of the extruded composites, as did the temperatures of the chill rolls and these were also optimized, as shown in Table 2.

The die temperatures also were varied to determine the best extrusion conditions and highest adhesion.

The preferred die temperatures are shown in Table 3. The dual manifold die that was used had six separately controllable temperature zones, as well as side heaters to promote edge flow. The first three zones (1-3 in Table 3) are the top of the die which was used for the lower-melting acrylic capstock layer and the last three zones (4-6 in Table 3) was used for the bottom polyester layer (substrate). Surprisingly, the best sheets were obtained if the die temperatures were elevated, for the acrylic capstock layer, and die temperatures on the section of the die used for the polyester substrate layer were lowered. The chill roll temperatures likewise were adjusted in order to achieve good adhesion between the layers of the multilayer composite structure.

**Table 3: Summary of optimized and standard co-extrusion die temperatures for polyester resins**

| **Die Temperature** | **DuraPET 1220/PCR standard** | **DuraPET 1220/PCR improved** | **DuraPET 0624/PCR standard** | **DuraPET 0624/PCR improved** |
|---|---|---|---|---|
| **Die 4 °C (°F)** | 277 (530) | 246 (475) | 277 (530) | 271 (520) |
| **Die 5 °C (°F)** | 277 (530) | 246 (475) | 277 (530) | 271 (520) |
| **Die 6 °C (°F)** | 277 (530) | 246 (475) | 277(530) | 271 (520) |
| **Side Heater °C (°F)** | 277 (530) | 257 (495) | 277 (530) | 268 (515) |

**Table 4: Summary of improved and standard co-extrusion die temperatures for acrylic - Solarkote^{®} A200 and Mi7^{®} (both Arkema)**

| **Die Temperature** | **Acrylic standard** | **Acrylic improved** |
|---|---|---|
| **Die 1 °C (°F)** | 221 (430) | 246-260 (475-500) |
| **Die 2 °C (°F)** | 221 (430) | 246-260 (475-500) |
| **Die 3 °C (°F)** | 221 (430) | 246-260 (475-500) |

There are three chill rolls, designated top, middle and bottom. Typically these rolls are set to: 82°C - 99°C - 102°C (180°F - 210°F - 215°F) respectively, i.e., the top roller is the coldest and the bottom roller is the hottest, but to prevent sticking and to promote optimum adhesion between the layers, improved results were obtained at 85°C - 71°C - 102°C (185°F, 160°F, and 215°F) for top, middle, and bottom respectively, such that the coldest roll is the middle one and the top roller is at an intermediate temperature, contrary to standard practice, wherein the middle roll is set at an intermediate temperature.

In addition to evaluating the effect of the temperatures of the extruders and the die in the co-extrusion process, the temperature of the chill rollers at the exit of the die was also varied to determine the conditions needed to effect good adhesion and to achieve good quality multilayer composite structures.

These rollers are designed to cool the hot extrudate as it emerges from the die. As stated above, the temperatures of these chill rollers also affected the quality of the multilayer composite structure and the integrity of the adhesion between the layers of the multilayer composite structure.

There are three chill rolls, designated top, middle and bottom. The hot multilayer composite structure exits the die and goes between the top and middle rollers. The structure then wraps around the middle roller and goes under the bottom roller and is then pulled off the extrusion line.

For standard co-extrusion these rolls are set to: 82°C - 99°C - 102°C (180°F - 210°F - 215°F) respectively, i.e., the top roller is the coldest and the bottom roller is the hottest, but to promote improved adhesion between the layers, as well as to obtain the best quality multilayer composite structures, the rollers were adjusted to 85°C, 71°C, and 102°C (185°F, 160°F, and 215°F) for top, middle, and bottom respectively, such that the coldest roll is the middle one and the top roller is at an intermediate temperature, contrary to standard practice, wherein the middle roll is set at an intermediate temperature.

Table 5 shows the thickness of the layers in the sheets that were successfully co-extruded according to the conditions of Tables 3 and 4, as well as using the optimum temperatures for the chill rollers. The acrylic used for all samples was either SolarKote^{®} A200 or Mi7^{®} (Arkema).

**Table 5: Co-extruded Sheet sample thicknesses**

| **Substrate** | **Cap (acrylic) Thickness mm (mil)** | **Substrate (polyester) Thickness mm (mil)** | **Total Thickness mm (mil)** |
|---|---|---|---|
| DuraPET 1220 | 0.1524 (6) | 1.4986 (59) | 1.651 (65) |
| DuraPET 1220 PCR | 0.2032 (8) | 1.4478 (57) | 1.651 (65) |
| DuraPET 0624 | 0.127 (5) | 1.397 (55) | 1.524 (60) |
| DuraPET 0624 PCR | 0.2032 (8) | 1.524 (60) | 1.7272 (68) |

### Example 5: Bend snap peel testing of co-extruded sheets

Bend-Snap-Peel testing was done on the co-extruded samples made according to the optimized conditions that were identified according to Example 3. The samples that were made with the standard conditions did not have enough adhesion to hold together enough to be tested.

These samples that were made with the improved processing conditions were evaluated for adhesion through "Bend-Snap-Peel" testing, in which a part is bent until the acrylic layer breaks ("snaps") and the two materials separated ("peeled").

This type of adhesion evaluation is summarized as follows:

### Delamination after snapping

First, the strip was bent until the acrylic cap layer snapped. Holding the still-bent sample up and analyzing it from the side, it was noted if the acrylic cap separated from substrate layer when snapped in tension. 'Y' means the cap layer began to peel upward away from the substrate layer and 'N' means the cap layer did not separate from the substrate layer.

The delamination results are also reported from 1 to 3, with 1 being the worst and 3 being the best. The worst (1) is defined as significant delamination. A (2) meant the corner of the strip delaminated and 3 meant that the layers of the composite did not separate.

### Peel Strength

Peel strength was also evaluated qualitatively on a scale from 1 to 3, with 1 being the worst sample and 3 being the best sample.

Note that two samples of each were evaluated and that therefore 'M' in the table means that one sample broke and the other did not break. Likewise, the numerical evaluations (1 - 3) were averaged. Table 6 summarizes the results.

**Table 6: Bend-Snap-Peel testing of co-extruded samples after optimized processing**

| **Cap** | **Substrate** | **Snap** | **Peel** | **Bend** |
|---|---|---|---|---|
| Solarkote^{®} A200 | DuraPET 1220 | N | 2 | 3 |
| Solarkote^{®} A200 | DuraPET 1220 PCR | N | 2 | 1.5 |
| Solarkote^{®} A200 | DuraPET 0624 | M | 2 | 1.5 |
| Solarkote^{®} A200 | DuraPET 0624 PCR | Y | 2.25 | 3 |
| Mi7^{®} | DuraPET 1220 | N | 2 | 2.5 |

### Example 5 - thermoforming

The coextruded sheets that were made according to Example 3 were thermoformed on a MAAC Thermoformer.

In the thermoforming process, the general steps are as follows.

The piece of composite structure (the "part" in the following discussion) to be thermoformed is clamped in a horizontal position in between a top oven and a bottom oven to be heated from both sides so that the sheet can be either pulled into a female die by means of a vacuum, or else shaped over a male die or "plug", also by means of vacuum. The die that is selected (male or female) can be arranged such that it is either above or below the piece to be formed.

The temperature of the oven can be adjusted by means of a number of zoned heaters that can be for instance, arranged on the front, back, sides, and middle of each of the top and bottom oven. These zoned heaters allow the operator to spot heat certain areas of the part to be formed if necessary.

Determining whether the part to be thermoformed is ready to be put in the die is controlled either by setting a temperature of the part or by setting a "sag". Sag is the amount that the part droops as it approaches or exceeds either its glass transition temperature or crystalline melting point. The sag is measured as the lowest point of the part as it droops when being heated. When either the target temperature or the appropriate amount of sag has been reached, the part is then pulled into the female mold or pulled over the male mold, depending on which type of die is determined to make the best parts.

The optimal conditions were:
- male die arranged on top of the part such that the male die pushes down into the part when the part is heated
- acrylic capstock layer on the bottom of the part
- top and bottom ovens at either 260°C (500°F) for recycled PET as the substrate or to 272°C (520°F) for virgin (non-recycled) PET
- sag set to 2,54 cm (1 inch)

The composite structure to be thermoformed was thus placed into the thermoformer apparatus such that the capstock layer (acrylic) was down and the mold would lower from the top. Because sag was set, samples auto-advanced to the next thermoforming stage once sag setpoint level was reached, regardless of temperature of the sheet (monitored through an infrared remote detector). In addition, the bottom oven compensation percentages were adjusted in order to spot heat certain areas of the sheet.

The important parameters that were evaluated for thermoforming were the oven temperature and the orientation of the die in relation to the acrylic capstock layer, as well as using the sag setpoint parameter to determine if the part was hot enough to be thermoformed. The oven temperature and the orientation of the die in relation to the acrylic capstock layer are non-standard conditions for thermoforming multilayer composite structures that comprise an acrylic capstock layer.

A standard oven temperature for thermoforming a part that has an acrylic capstock layer is 182°C - 204°C (360°F - 400°F). Usually, when thermoforming a multilayer part that has an acrylic capstock layer, the acrylic layer is arranged such that it is on the top and is pulled over the die, rather than having the die be pushed down on the multilayer composite part.

The thermoformed sheet made with the improved conditions of hotter than standard oven and the male die or plug being pushed down in to the composite structure had good definition.

### Example 6: Bend-Snap-Peel testing results of thermoformed sheets:

The thermoformed parts made according to the improved conditions described in Example 5 were subjected to Bend-Snap-Peel testing as described above. The results are summarized in Table 7.

These parts made with the improved conditions had much improved adhesion between the layers after thermoforming, compared to the standard thermoforming conditions, wherein the individual layers of the parts did not bond together enough for the part to be tested. It is important to emphasize that the thermoforming step also did not deteriorate the good adhesion between the layers of the substrate and capstock layer that were achieved by forming the multilayer composite sheet by co-extrusion using the improved conditions for the co-extrusion process according to Example 3.

**Table 7: Summary of Bend-Snap-Peel testing of thermoformed parts.**

| **Capstock** | **Substrate** | **Snap** | **Peel** | **Twist** | **Bend** |
|---|---|---|---|---|---|
| Mi7^{®} Acrylic resin (Arkema) | DuraPET 1220 | N | 2 | 3 | 2.5 |
| Solarkote^{®} A200-103 | DuraPET 1220 | N | 2.75 | 3 | 3 |

| **Cap** | **Substrate** | **Snap** | **Peel** | **Twist** | **Bend** |
|---|---|---|---|---|---|
| Mi7^{®} Acrylic resin | DuraPET 1220 | Y | 0 | 0 | 0 |
| Solarkote^{®} A200-103 | DuraPET 1220 | Y | 1 | 1 | 1 |
| Solarkote^{®} A200-103 | DuraPET 1220 | N | 2 | - | 2.5 |
| Solarkote^{®} A200-103 | DuraPET 1220 PCR | M | 2 | - | - |
| Solarkote^{®} A200-103 | DuraPET 0624 | M | 2 | - | - |
| Solarkote^{®} A200-103 | DuraPET 0624 PCR | Y | 2.25 | - | 3 |

Various exemplary aspects of the present disclosure may be summarized as follows:
A multilayer composite structure having at least one polymer-based capstock layer, and least one polyester-based substrate layer is disclosed. The multilayer composite structure has an outer layer and an inner layer. The outer layer has an external surface, such that the polymer-based layer is the outer layer and the polyester-based substrate layer is the inner layer.

The polymer-based capstock layer contains at least one polymer selected from acrylic polymers, styrenic polymers, acrylonitrile polymers, polyolefins, polyvinyl chlorides (PVC), polycarbonates (PC), polyurethanes (PU), thermoplastic polyurethanes (TPU), or copolymers or mixtures of these materials. Preferably the capstock layer is an acrylic polymer, styrenic polymer or acrylonitrile polymer or a homopolymer, a co-polymer, a terpolymer or a mixture of two or more of these polymers.

The polymer that makes up the capstock layer of the multilayer composite structure preferably contains at least one of these monomers, or a mixture of one or more of these monomers: methyl methacrylate, methyl acrylate, ethyl acrylate, ethyl methacrylate, butyl acrylate, butyl methacrylate, iso-octyl methacrylate, iso-octyl acrylate, lauryl acrylate, lauryl methacrylate, stearyl acrylate, stearyl methacrylate, isobornyl acrylate, isobornyl methacrylate, methoxy ethyl acrylate, methoxy ethyl methacrylate, 2-ethoxy ethyl acrylate, 2-ethoxy ethyl methacrylate, dimethylamino ethyl acrylate, dimethylamino ethyl methacrylate, styrene, acrylonitrile, vinyl cyanide compounds, derivatives of styrene.

The polymer that makes up the capstock layer of the multilayer composite structure is preferably an acrylic polymer which is a copolymer of methyl methacrylate and 2 - 16 percent by weight of one or more C₁₋₄ acrylates.

In another disclosure the capstock layer of the multilayer composite structure is a styrenic polymer or a mixture of styrenic polymers, preferably polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-acrylonitrile-butadiene-styrene (MABS) copolymers, styrene-butadiene copolymers (SB), styrene-butadiene-styrene block (SBS) copolymers and their partially or fully hydrogenated derivatives, styrene-isoprene copolymers, styrene-isoprene-styrene (SIS) block copolymers or their partially or fully hydrogenated derivatives, or styrene-(meth)acrylate copolymers. The capstock layer of the multilayer composite structure is preferably an acrylonitrile-styrene-acrylate (ASA) terpolymer.

In yet another disclosure the polyester-based substrate layer of the multilayer composite structure is made of at least one of polyethylene terephthalate (PET), polyethylene naphthalate (PEN), polybutylene terephthalate (PBT), or glycol-modified polyester (PETG) or a mixture of these materials. The substrate may also be made of a polycarbonate. The polyester-based substrate layer of the multilayer composite structure may in addition contain at least one of an ethylene-acrylic ester-maleic anhydride copolymer, an ethylene-acrylic ester-glycidyl methacrylate copolymer, or an ethylene-acrylic ester copolymer. In another disclosure, the polyester-based substrate layer may also contain at least one impact modifying additive. Polybutadiene rubber is a preferred impact modifying additive for the polyester-based substrate layer of the multilayer composite.

Another exemplary disclosure of the multilayer composite structure disclosed herein has at least one exterior layer that is disposed on an external surface of the polymer-based capstock layer. A fluoropolymer is a preferred material for this exterior layer that is disposed on an external surface of the polymer-based capstock layer. A blend of polymers that contains the fluoropolymer as the exterior layer is also envisaged as a disclosure of the multilayer composite structure. The fluoropolymer used in the exterior layer of the multilayer composite structure is preferably a homopolymer of vinylidene fluoride, or a copolymer comprising from 70 to below 100 weight percent of vinylidene fluoride monomer units. The fluoropolymer used in the exterior layer of the multilayer the composite can be a copolymer of vinylidene fluoride and hexafluoropropene. The exterior layer of the multilayer composite is between 0.00635 mm (0.25 mil) and 0.254 mm (10 mil) thick.

In yet another disclosure, the multilayer composite structure has at least one tie layer that is disposed between the at least one polymer-based capstock layer and the at least one polyester-based substrate layer. The tie layer or tie layers in the multilayer composite structure preferably contain at least one of a styrenic block copolymer, an ethylene-acrylic ester-maleic anhydride copolymer, an ethylene-acrylic ester-glycidyl methacrylate copolymer, a polyamide, a polyamide copolymer, an ethylene-acrylic ester copolymer, or a mixture of these polymers. The tie layer or tie layers in the multilayer composite structure preferable contains a styrenic block copolymer.

In yet another disclosure, the multilayer composite structure that has an exterior layer disposed on an external surface of the polymer-based capstock layer also has at least one tie layer disposed between the exterior layer and the external surface of the polymer-based capstock layer. This tie layer or layers disposed between the exterior layer and the external surface of the polymer-based capstock layer may contain at least one of a styrenic block copolymer, an ethylene-acrylic ester-maleic anhydride copolymer, an ethylene-acrylic ester-glycidyl methacrylate copolymer, a polyamide, a polyamide copolymer, an ethylene-acrylic ester copolymer, or a mixture of these polymers This tie layer or layers disposed between the exterior layer and the external surface of the polymer-based capstock layer can contain a styrenic block copolymer.

The polymer-based layer of the multilayer composite structure may contain a polymer having a weight average molecular weight of between 50,000 and 500,000 g/mol, as measured by gel permeation chromatography.

The polymer capstock layer of the multilayer composite structure according to claim is preferably between 0.0254 mm (1 mil) and 2.54 mm (100 mil) thick.

The polyester-based substrate layer of the multilayer composite structure is preferably at least 0.254 mm (10 mil) thick. The polyester-based substrate layer of the multilayer composite structure may be up to 10 cm thick. The polyester-based substrate layer of the multilayer composite structure may be more than 10 cm thick.

If a tie layer or layers are used between any of the layers of the multi-layer composite structure disclosed herein, the tie layer or tie layers are preferably between 0.00635 mm (0.25 mil) and 0.254 mm (10) mil thick.

A multilayer composite structure disclosed herein has at least one polymer-based capstock layer and at least one polyester-based substrate layer. The multilayer composite structure has outer layer that has an external surface. The multilayer composite structure also has an inner layer. The polymer-based capstock layer is the outer layer of the composite structure and the polyester-based substrate layer is the inner layer of the composite structure. The polymer-based outer layer contains at least one of an acrylic polymer or a styrenic polymer or an acrylonitrile polymer. At least one of the acrylic polymer or the styrenic polymer or the acrylonitrile polymer contains at least one of these monomers or a mixture of these monomers: methyl methacrylate, methyl acrylate, ethyl acrylate, ethyl methacrylate, butyl acrylate, butyl methacrylate, iso-octyl methacrylate, iso-octyl acrylate, lauryl acrylate, lauryl methacrylate, stearyl acrylate, stearyl methacrylate, isobornyl acrylate, isobornyl methacrylate, methoxy ethyl acrylate, methoxy ethyl methacrylate, 2-ethoxy ethyl acrylate, 2-ethoxy ethyl methacrylate, dimethylamino ethyl acrylate, dimethylamino ethyl methacrylate, acrylonitrile, styrene, derivatives of styrene. The at least one polyester-based substrate inner layer contains at least one these polyesters or mixture of polyesters: polyethylene terephthalate (PET), polyethylene naphthalate (PEN), polybutylene terephthalate (PBT), glycol-modified PET (PETG). This disclosure of the multilayer composite structure may optionally have at least one tie layer that is disposed between the outer polymer-based layer and the inner polyester-based substrate layer. This tie layer may contain at least one of a styrenic block copolymer, an ethylene-acrylic ester-maleic anhydride copolymer, an ethylene-acrylic ester-glycidyl methacrylate copolymer, an ethylene-acrylic ester copolymer, a polyamide, a polyamide copolymer, or a mixture of these materials. The multilayer composite structure may optionally have at least one exterior layer that is disposed on the external surface of the polymer-based capstock outer layer. The exterior layer may contain a fluoropolymer, such that the fluoropolymer is a homopolymer of vinylidene fluoride, or a copolymer comprising from 70 to below 100 weight percent of vinylidene fluoride monomer units.

Also disclosed is a method of making the multilayer composite structures disclosed herein. The method comprises co-extruding, through a multi-manifold die, the at least one polymer-based capstock layer using a first extruder and the at least one polyester-based substrate layer using a second extruder to obtain the multilayer composite structure. The polymer-based capstock layer has a polymer standard operating temperature and a polymer standard extruder temperature profile. The polyester-based substrate layer has a polyester standard operating temperature and a polyester standard extruder temperature profile. The temperature of the first extruder (which extrudes the polymer-based capstock layer) is controlled such that the polymer-based capstock layer is extruded using a first extruder temperature profile. The temperature of the second extruder (which extrudes the polyester-based layer) is controlled such that he polyester-based substrate layer is extruded using a second extruder temperature profile. The first extruder temperature profile is selected to be hotter than the polymer standard extruder temperature profile and the second extruder temperature profile is selected to be colder than the polyester standard extruder temperature profile. The temperature of the multi-manifold die is controlled such that the least one polymer-based capstock layer is heated at a first die temperature and the at least one polyester-based substrate layer is heated at a second die temperature. The first die temperature is selected to be hotter than the polymer standard operating temperature and the second die temperature is selected to be colder than the polyester standard operating temperature. When the multilayer composite structure is made according to this co-extrusion method, adhesion between the at least one polymer-based capstock layer and the at least one polyester-based substrate layer as measured as (Nm) lbf/in at 2.54 cm/min (1 in/min) is at least 20% higher than if the first extruder temperature profile is selected to be the polymer standard extruder temperature profile and the second extruder temperature profile is selected to be the polyester standard extruder profile and the first die temperature is selected to be the polymer standard operating temperature and the second die temperature is selected to be the same as the polyester standard operating temperature. The co-extrusion process may further have a step of passing the multilayer composite structure through a set of three chill rollers that are arranged at the outlet of the multi-manifold die. The chill rollers are arranged such that one roller is on top, one roller is in the middle and one roller is on the bottom. When the multilayer composite structure emerges from the multi-manifold die, the multilayer composite structure first goes between the top roller and the middle roller and then goes under the bottom roller. Each of these three rollers is set at a different temperature, such that the bottom roller is the hottest, the middle roller is the coldest and the top roller is intermediate between the temperature of the bottom roller and the middle roller.

Another exemplary method of making a multilayer composite structure is compression molding the at least one polymer-based capstock layer and the at least one polyester-based substrate layer on a compression press to obtain the multilayer composite structure. The polymer-based capstock layer has a polymer standard operating temperature and the polyester-based substrate layer has a polyester standard operating temperature. The compression molding process to produce the multilayer composite structure has the following steps: 1) molding the polyester-based substrate layer at the polyester standard operating temperature; 2) leaving polyester-based substrate layer in the compression press; 3) changing the temperature of the compression press to a second temperature; 4) molding the polymer-based capstock layer over the polyester-based substrate layer at the second temperature. The second temperature is selected to be a higher temperature than the polymer standard operating temperature. When manufactured according to this exemplary compression molding process, the polymer-based capstock layer is adhered to the polyester-based substrate layer such that the polymer-based capstock layer does not separate from the polyester-based substrate layer when the multilayer composite structure is bent.

Disclosed herein is a process of thermoforming the multilayer composite structure. According to this thermoforming method, the at least one polymer-based capstock layer has a polymer standard operating temperature and the at least one polyester-based substrate layer has a polyester standard operating temperature. The thermoforming method disclosed herein has the following steps. The first is providing a thermoformer that: a.) has an oven that has at least one oven temperature that can be set; b.) has at least one male die that is moveable in relation to a part being thermoformed; and c.) has a sag setpoint that can be changed such that the sag setpoint determines whether the part to be thermoformed is ready to be thermoformed using the male die. The next step is setting the at least one thermoformer oven temperature to be at least 3,89 °C (25°F) higher than the polymer standard operating temperature and the same as the polyester standard operating temperature and then setting the sag setpoint. After that, the multilayer composite structure is placed in the thermoformer oven such that the polymer-based layer is facing downwards. Then the male die is arranged so as to be above the multilayer composite structure. When the sag setpoint of the thermoformer is reached, the male die is pushed down into the multilayer composite structure. When the multilayer composite structure is formed according to this exemplary thermoforming process, the polymer-based capstock layer of the multilayer composite remains adhered to the polyester-based substrate layer such that the polymer-based capstock layer does not separate from polyester-based substrate layer when the multilayer composite structure is bent.

Also disclosed herein is a construction material made from the multilayer composite structure. The construction material is siding, roofing, or decking.

Also disclosed are automotive parts made from the multilayer composite structure. The automotive parts may be truck bed liners, headlights, or automotive exterior parts.

Although the invention is illustrated and described herein with reference to specific embodiments, the invention is only limited by the scope of the appended claims.

## Claims

1. A multilayer composite structure comprising:
a) at least one polymer-based capstock layer, wherein the at least one polymer-based capstock layer comprises at least one polymer being an acrylic polymer which is a copolymer of methyl methacrylate and 2-16 percent by weight of one or more C₁₋₄ acrylates;
b) at least one polyester-based substrate layer, wherein the polyester-based substrate layer comprises at least one of polyethylene terephthalate (PET), polyethylene naphthalate (PEN), polybutylene terephthalate (PBT), or glycol-modified polyester (PETG); and
wherein the multilayer composite structure comprises an outer layer and an inner layer, wherein the outer layer has an external surface, and wherein the polymer-based capstock layer is the outer layer and the polyester-based substrate layer is the inner layer.

2. The multilayer composite according to claim 1 wherein the polyester-based substrate layer further comprises at least one of an ethylene-acrylic ester-maleic anhydride copolymer, an ethylene-acrylic ester-glycidyl methacrylate copolymer, or an ethylene-acrylic ester copolymer.

3. The multilayer composite according to claim 1 wherein the polyester-based substrate layer further comprises at least one impact modifying additive.

4. The multilayer composite according to claim 1 further comprising at least one exterior layer, wherein the at least one exterior layer is disposed on the external surface of the at least one polymer-based capstock layer and wherein the at least one exterior layer is between 0.00635 mm (0.25 mil) and 0.254 mm (10 mil) thick.

5. The multilayer composite according to claim 4 wherein the at least one exterior layer comprises a fluoropolymer, wherein the fluoropolymer is a homopolymer of vinylidene fluoride, or a copolymer comprising from 70 to below 100 weight percent of vinylidene fluoride monomer units and preferably the fluoropolymer is a copolymer of vinylidene fluoride and hexafluoropropene.

6. The multilayer composite according to claim 1, further comprising at least one tie layer, wherein the at least one tie layer is disposed between the at least one polymer- based capstock layer and the at least one polyester based substrate layer and wherein the at least one tie layer comprises at least one of a styrenic block copolymer, an ethylene-acrylic ester-maleic anhydride copolymer, an ethylene-acrylic ester-glycidyl methacrylate copolymer, a polyamide, a polyamide copolymer, an ethylene-acrylic ester copolymer, or a mixture thereof.

7. The multi-layer composite structure according to claim 6, wherein the tie layer is between 0.00635 mm (0.25 mil) and 0.254 mm (10 mil) thick.

8. The multilayer composite structure according to claim 1, wherein the polymer-based capstock layer is between 0.0254 mm (1 mil) and 2.54 mm (100 mil) thick and wherein the polyester-based substrate layer is at least 0.254 mm (10 mil) thick.

9. A method of making the multilayer composite structure according to claim 1, wherein the method comprises co-extruding through a multi-manifold die the at least one polymer-based capstock layer using a first extruder and the at least one polyester-based substrate layer using a second extruder to obtain the multilayer composite structure,
wherein the at least one polymer-based capstock layer has a polymer standard operating temperature and a polymer standard extruder temperature profile and the at least one polyester-based substrate layer has a polyester standard operating temperature and a polyester standard extruder temperature profile;
wherein the first extruder temperature is controlled such that the polymer-based capstock layer is extruded using a first extruder temperature profile and the second extruder temperature is controlled such that the polyester-based substrate layer is extruded using a second extruder temperature profile, wherein the first extruder temperature profile is selected to be hotter than the polymer standard extruder temperature profile and the second extruder temperature profile is selected to be colder than the polyester standard extruder temperature profile, and
wherein the multi-manifold die temperature is controlled such that the at least one polymer-based capstock layer is heated at a first die temperature and the at least one polyester-based substrate layer is heated at a second die temperature, wherein the first die temperature is selected to be hotter than the polymer standard operating temperature and the second die temperature is selected to be colder than the polyester standard operating temperature;
whereby adhesion between the at least one polymer-based capstock layer and the at least one polyester-based substrate layer as measured as Nm (lbf/in) at 2.54 cm/min (1 in/min) is at least 20% higher than if the first extruder temperature profile is selected to be the polymer standard extruder temperature profile and the second extruder temperature profile is selected to be the polyester standard extruder temperature profile and the first die temperature is selected to be the polymer standard operating temperature and the second die temperature is selected to be the same as the polyester standard operating temperature.

10. The method of making the multilayer composite structure according to claim 9, wherein the co-extrusion process further comprises passing the multilayer composite structure through a set of three chill rollers that are arranged at the outlet of the multi-manifold die such that one roller is on top, one roller is in the middle and one roller is on the bottom and wherein when the multilayer composite structure emerges from the multi-manifold die, the multilayer composite structure first goes between the top roller and the middle roller and then goes under the bottom roller;
wherein each of the rollers is set at a different temperature, wherein the bottom roller is the hottest, the middle roller is the coldest and the top roller is intermediate between the temperature of the bottom roller and the middle roller.

11. A method of making the multilayer composite structure according to claim 1, wherein the method comprises compression molding the at least one polymer-based capstock layer and the at least one polyester-based substrate layer together to obtain the multilayer composite structure, wherein the at least one polymer-based capstock layer has a polymer standard operating temperature and the at least one polyester-based substrate layer has a polyester standard operating temperature,
wherein compression molding comprises the following steps:
1) providing a compression molding press that is temperature-controlled;
2) molding the polyester-based substrate layer in the press at the polyester standard operating temperature;
3) leaving the polyester-based substrate layer in the press;
4) changing the temperature of the press to a second temperature;
5) molding the polymer-based capstock layer over the polyester-based substrate layer at the second temperature; wherein the second temperature is selected to be a higher temperature than the polymer standard operating temperature;
whereby the polymer-based capstock layer is adhered to the polyester-based substrate layer such that the polymer-based capstock layer does not separate from the polyester-based substrate layer when the multilayer composite structure is bent.

12. A method of thermoforming the multilayer composite structure according to claim 1, wherein the at least one polymer-based capstock layer has a polymer standard operating temperature and the at least one polyester-based substrate layer has a polyester standard operating temperature, wherein the method comprises the steps of:
1) providing a thermoformer that:
a. has at least one oven that has at least one oven temperature that can be set,
b. has at least one male die that is moveable in relation to a part being thermoformed, and
c. has a sag setpoint that can be changed wherein the sag setpoint determines whether the part to be thermoformed is ready to be thermoformed using the male die;
2) setting the at least one thermoformer oven temperature to be at least 3,89 °C (25°F) higher than the polymer standard operating temperature and the same as the polyester standard operating temperature;
3) setting the sag setpoint;
4) placing the multilayer composite structure in the thermoformer oven such that the polymer-based capstock layer is downwards; and
5) arranging the male die to be above the multilayer composite structure
whereby when the sag setpoint is reached, the male die is pushed down into the multilayer composite structure;
whereby the polymer-based capstock layer is adhered to the polyester-based substrate layer such that the polymer-based capstock layer does not separate from polyester-based substrate layer when the multilayer composite structure is bent.

13. An article of manufacture comprising the multilayer composite structure according to claim 1, wherein the article of manufacture is a construction material selected from the group consisting of siding, roofing, or decking.

14. An article of manufacture comprising the multilayer composite structure according to claim 1, wherein the article of manufacture is an automotive part selected from the group consisting of truck bed liners, headlights, or automotive exterior parts.

## Patentansprüche

1. Mehrschichtige Verbundstruktur, umfassend:
a) mindestens eine Deckschicht auf Polymerbasis, wobei die mindestens eine Deckschicht auf Polymerbasis mindestens ein Polymer umfasst, bei dem es sich um ein Acrylpolymer handelt, das ein Copolymer aus Methylmethacrylat und 2-16 Gew.-% eines oder mehrerer C₁₋₄-Acrylate ist;
b) mindestens eine Substratschicht auf Polyesterbasis, wobei die Substratschicht auf Polyesterbasis mindestens eines aus Polyethylenterephthalat (PET), Polyethylennaphthalat (PEN), Polybutylenterephthalat (PBT) oder glykolmodifiziertem Polyester (PETG) umfasst; und
wobei die mehrschichtige Verbundstruktur eine äußere Schicht und eine innere Schicht umfasst, wobei die äußere Schicht eine äußere Oberfläche aufweist und wobei die Deckschicht auf Polymerbasis die äußere Schicht ist und die Substratschicht auf Polyesterbasis die innere Schicht ist.

2. Mehrschichtiger Verbund nach Anspruch 1, wobei die Substratschicht auf Polyesterbasis ferner mindestens eines aus einem Ethylen-Acrylester-Maleinsäureanhydrid-Copolymer, einem Ethylen-Acrylester-Glycidylmethacrylat-Copolymer oder einem Ethylen-Acrylester-Copolymer umfasst.

3. Mehrschichtiger Verbund nach Anspruch 1, wobei die Substratschicht auf Polyesterbasis außerdem mindestens ein schlagzähmachendes Additiv enthält.

4. Mehrschichtiger Verbund nach Anspruch 1, der ferner mindestens eine äußere Schicht umfasst, wobei die mindestens eine äußere Schicht auf der äußeren Oberfläche der mindestens einen Deckschicht auf Polymerbasis angeordnet ist und wobei die mindestens eine äußere Schicht zwischen 0,00635 mm (0,25 mil) und 0,254 mm (10 mil) dick ist.

5. Mehrschichtiger Verbund nach Anspruch 4, wobei die mindestens eine äußere Schicht ein Fluorpolymer umfasst, wobei das Fluorpolymer ein Homopolymer von Vinylidenfluorid oder ein Copolymer ist, das 70 bis unter 100 Gewichtsprozent Vinylidenfluorid-Monomereinheiten umfasst, und vorzugsweise das Fluorpolymer ein Copolymer von Vinylidenfluorid und Hexafluorpropen ist.

6. Mehrschichtiger Verbund nach Anspruch 1, der ferner mindestens eine Bindungsschicht umfasst, wobei die mindestens eine Bindungsschicht zwischen der mindestens einen Deckschicht auf Polymerbasis und der mindestens einen Substratschicht auf Polyesterbasis angeordnet ist und wobei die mindestens eine Bindungsschicht mindestens eines aus einem Styrolblockcopolymer einem Ethylen-Acrylsäureester-Maleinsäureanhydrid-Copolymer, einem Ethylen-Acrylsäureester-Glycidylmethacrylat-Copolymer, einem Polyamid, einem Polyamid-Copolymer, einem Ethylen-Acrylsäureester-Copolymer oder einer Mischung davon umfasst.

7. Mehrschichtige Verbundstruktur nach Anspruch 6, wobei die Verbindungsschicht zwischen 0,00635 mm (0,25 mil) und 0,254 mm (10 mil) dick ist.

8. Mehrschichtige Verbundstruktur nach Anspruch 1, wobei die Deckschicht auf Polymerbasis zwischen 0,0254 mm (1 mil) und 2,54 mm (100 mil) dick ist und wobei die Substratschicht auf Polyesterbasis mindestens 0,254 mm (10 mil) dick ist.

9. Verfahren zur Herstellung der mehrschichtigen Verbundstruktur nach Anspruch 1, wobei das Verfahren das Co-Extrudieren durch eine Mehrfachverteilerdüse der mindestens einen Deckschicht auf Polymerbasis unter Verwendung eines ersten Extruders und der mindestens einen Substratschicht auf Polyesterbasis unter Verwendung eines zweiten Extruders umfasst, um die Mehrschicht-Verbundstruktur zu erhalten,
wobei die mindestens eine polymerbasierte Deckschicht eine Polymer-Standardbetriebstemperatur und ein Polymer-Standard-Extrudertemperaturprofil aufweist und die mindestens eine polyesterbasierte Substratschicht eine Polyester-Standardbetriebstemperatur und ein Polyester-Standard-Extrudertemperaturprofil aufweist;
wobei die Temperatur des ersten Extruders so gesteuert wird, dass die polymerbasierte Deckschicht unter Verwendung eines ersten Extrudertemperaturprofils extrudiert wird, und die Temperatur des zweiten Extruders so gesteuert wird, dass die polyesterbasierte Substratschicht unter Verwendung eines zweiten Extrudertemperaturprofils extrudiert wird, wobei das erste Extrudertemperaturprofil so ausgewählt ist, dass es heißer ist als das Polymer-Standard-Extrudertemperaturprofil, und das zweite Extrudertemperaturprofil so ausgewählt ist, dass es kälter ist als das Polyester-Standard-Extrudertemperaturprofil, und
wobei die Temperatur der Mehrfachverteilerdüse so gesteuert wird, dass die mindestens eine Deckschicht auf Polymerbasis bei einer ersten Düsentemperatur und die mindestens eine Substratschicht auf Polyesterbasis bei einer zweiten Düsentemperatur erwärmt wird, wobei die erste Düsentemperatur so gewählt wird, dass sie heißer ist als die Standardbetriebstemperatur des Polymers und die zweite Düsentemperatur so gewählt wird, dass sie kälter ist als die Standardbetriebstemperatur des Polyesters;
wobei eine Haftung zwischen der mindestens einen Deckschicht auf Polymerbasis und der mindestens einen Substratschicht auf Polyesterbasis, gemessen als Nm (lbf/in) bei 2,54 cm/min (1 in/min), mindestens 20 % höher ist als wenn das erste Extrudertemperaturprofil als das Polymer-Standard-Extrudertemperaturprofil und das zweite Extrudertemperaturprofil als das Polyester-Standard-Extrudertemperaturprofil ausgewählt wird und die erste Düsentemperatur als die Polymer-Standard-Betriebstemperatur und die zweite Düsentemperatur als die gleiche wie die Polyester-Standard-Betriebstemperatur ausgewählt wird.

10. Verfahren zur Herstellung der mehrschichtigen Verbundstruktur nach Anspruch 9, wobei das Coextrusionsverfahren ferner das Hindurchführen der mehrschichtigen Verbundstruktur durch einen Satz von drei Kühlwalzen umfasst, die am Auslass der Mehrfachverteilerdüse so angeordnet sind, dass sich eine Walze oben, eine Walze in der Mitte und eine Walze unten befindet, und wobei, wenn die mehrschichtige Verbundstruktur aus der Mehrfachverteilerdüse austritt, die mehrschichtige Verbundstruktur zunächst zwischen der oberen Walze und der mittleren Walze hindurchgeht und dann unter der unteren Walze hindurchgeht;
wobei jede der Walzen auf eine andere Temperatur eingestellt ist, wobei die untere Walze die heißeste ist, die mittlere Walze die kälteste ist und die obere Walze zwischen der Temperatur der unteren Walze und der mittleren Walze liegt.

11. Verfahren zur Herstellung der mehrschichtigen Verbundstruktur nach Anspruch 1, wobei das Verfahren das Formpressen der mindestens einen Deckschicht auf Polymerbasis und der mindestens einen Substratschicht auf Polyesterbasis umfasst, um die mehrschichtige Verbundstruktur zu erhalten, wobei die mindestens eine Deckschicht auf Polymerbasis eine Polymer-Standardbetriebstemperatur und die mindestens eine Substratschicht auf Polyesterbasis eine Polyester-Standardbetriebstemperatur aufweist,
wobei das Formpressen die folgenden Schritte umfasst:
1) Bereitstellen einer Formpresse, die temperaturgesteuert ist
2) Formen der Substratschicht auf Polyesterbasis in der Presse bei der Polyester-Standardbetriebstemperatur;
3) Belassen der Substratschicht auf Polyesterbasis in der Presse;
4) Ändern der Temperatur der Presse auf eine zweite Temperatur;
5) Formen der Deckschicht auf Polymerbasis über der Substratschicht auf Polyesterbasis bei der zweiten Temperatur; wobei die zweite Temperatur so gewählt wird, dass sie eine höhere Temperatur als die Polymer-Standardbetriebstemperatur ist;
wobei die Deckschicht auf Polymerbasis so an der Substratschicht auf Polyesterbasis haftet, dass sich die Deckschicht auf Polymerbasis nicht von der Substratschicht auf Polyesterbasis löst, wenn die mehrschichtige Verbundstruktur gebogen wird.

12. Verfahren zum Thermoformen der mehrschichtigen Verbundstruktur nach Anspruch 1, wobei die mindestens eine Deckschicht auf Polymerbasis eine Polymer-Standardbetriebstemperatur aufweist und die mindestens eine Substratschicht auf Polyesterbasis eine Polyester-Standardbetriebstemperatur aufweist, wobei das Verfahren die folgenden Schritte umfasst:
1) Bereitstellen eines Thermoformers, der:
a. mindestens einen Ofen aufweist, der mindestens eine einstellbare Ofentemperatur aufweist,
b. mindestens eine Patrize aufweist, die in Bezug auf ein Teil, das thermogeformt werden soll, beweglich ist, und
c. einen veränderbaren Durchhangs-Sollwert aufweist, wobei der Durchhangs-Sollwert bestimmt, ob das Teil, das thermogeformt werden soll, bereit ist, unter Verwendung der Patrize thermogeformt zu werden;
2) Einstellen der mindestens einen Thermoformerofentemperatur, um mindestens 3,89 °C (25°F) höher als die Polymer-Standardbetriebstemperatur und gleich der Polyester-Standardbetriebstemperatur zu sein;
3) Einstellen des Durchhang-Sollwerts;
4) Platzieren der mehrschichtigen Verbundstruktur in dem Thermoformerofen, so dass die Deckschicht auf Polymerbasis nach unten zeigt; und
5) Anordnen der Patrize, um oberhalb der mehrschichtigen Verbundstruktur zu sein;
wobei wenn der Durchhang-Sollwert erreicht ist, die Patrize nach unten in die mehrschichtige Verbundstruktur gedrückt wird;
wobei die Deckschicht auf Polymerbasis so an der Substratschicht auf Polyesterbasis haftet, dass sich die Deckschicht auf Polymerbasis nicht von der Substratschicht auf Polyesterbasis löst, wenn die mehrschichtige Verbundstruktur gebogen wird.

13. Herstellungsgegenstand, der die mehrschichtige Verbundstruktur nach Anspruch 1 umfasst, wobei der Herstellungsgegenstand ein Baumaterial ist, das aus der Gruppe ausgewählt ist, die aus Verkleidungen, Bedachungen oder Belägen besteht.

14. Herstellungsgegenstand, der die mehrschichtige Verbundstruktur nach Anspruch 1 umfasst, wobei der Herstellungsgegenstand ein Kraftfahrzeugteil ist, das aus der Gruppe ausgewählt ist, die aus LKW-Ladeflächenauskleidungen, Scheinwerfern oder Kraftfahrzeugaußenteilen besteht.

## Revendications

1. Structure composite multicouche comprenant :
a) au moins une couche de protection à base de polymère, ladite au moins une couche de protection à base de polymère comprenant au moins un polymère consistant en un polymère acrylique qui consiste en un copolymère composé de méthacrylate de méthyle et de 2 à 16 pour cent en poids d'un ou plusieurs acrylates en C₁₋₄,
b) au moins une couche de substrat à base de polyester, ladite couche de substrat à base de polyester comprenant au moins un matériau parmi le polytéréphtalate d'éthylène (PET), le polynaphtalate d'éthylène (PEN), le polytéréphtalate de butylène (PBT) ou le polytéréphtalate d'éthylène glycol (PETG) ;
ladite structure composite multicouche comprenant une couche externe et une couche interne, la couche externe ayant une surface externe, et la couche de protection à base de polymère constituant la couche externe et la couche de substrat à base de polyester constituant la couche interne.

2. Composite multicouche selon la revendication 1, dans lequel la couche de substrat à base de polyester comprend en outre au moins un matériau parmi un copolymère éthylène-ester acrylique-anhydride maléique, un copolymère éthylène-ester acrylique-méthacrylate de glycidyle ou un copolymère éthylène-ester acrylique.

3. Composite multicouche selon la revendication 1, dans lequel la couche de substrat à base de polyester comprend en outre au moins un additif modificateur d'impact.

4. Composite multicouche selon la revendication 1, comprenant en outre au moins une couche extérieure, ladite au moins une couche extérieure étant disposée sur la surface externe de l'au moins une couche de protection à base de polymère et ladite au moins une couche extérieure ayant une épaisseur comprise entre 0,00635 mm (0,25 mil [millième de pouce]) et 0,254 mm (10 mil).

5. Composite multicouche selon la revendication 4, dans lequel l'au moins une couche extérieure comprend un fluoropolymère, ledit fluoropolymère étant un homopolymère de fluorure de vinylidène ou un copolymère comprenant de 70 à moins de 100 pour cent en poids d'unités monomère de fluorure de vinylidène, le fluoropolymère étant de préférence un copolymère de fluorure de vinylidène et d'hexafluoropropène.

6. Composite multicouche selon la revendication 1, comprenant en outre au moins une couche de liaison, ladite au moins une couche de liaison étant disposée entre l'au moins une couche de protection à base de polymère et l'au moins une couche de substrat à base de polyester, et ladite au moins une couche de liaison comprenant au moins l'un des copolymères suivants : un copolymère bloc styrénique, un copolymère éthylène-ester acrylique-anhydride maléique, un copolymère éthylène-ester acrylique-méthacrylate de glycidyle, un polyamide, un copolymère polyamide, un copolymère éthylène-ester acrylique, ou un mélange de ceux-ci.

7. Structure composite multicouche selon la revendication 6, dans laquelle la couche de liaison a une épaisseur comprise entre 0,00635 mm (0,25 mil) et 0,254 mm (10 mil).

8. Structure composite multicouche selon la revendication 1, dans laquelle la couche de protection à base de polymère a une épaisseur comprise entre 0,0254 mm (1 mil) et 2,54 mm (100 mil) et la couche de substrat à base de polyester a une épaisseur d'au moins 0,254 mm (10 mil).

9. Procédé de fabrication de la structure composite multicouche selon la revendication 1, le procédé comprenant la coextrusion, par une filière à distributeurs multiples, de l'au moins une couche de protection à base de polymère au moyen d'une première extrudeuse et de l'au moins une couche de substrat à base de polyester au moyen d'une deuxième extrudeuse pour obtenir la structure composite multicouche,
ladite au moins une couche de protection à base de polymère ayant une température standard de mise en œuvre de polymère et un profil de température standard d'extrusion de polymère et l'au moins une couche de substrat à base de polyester ayant une température standard de mise en œuvre de polyester et un profil de température standard d'extrusion de polyester,
la température de la première extrudeuse étant régulée de telle façon que la couche de protection à base de polymère est extrudée au moyen d'un profil de température de première extrudeuse et la deuxième température de l'extrudeuse est régulée de telle façon que la couche de substrat à base de polyester est extrudée au moyen d'un profil de température de deuxième extrudeuse, ledit profil de température de première extrudeuse étant choisi pour être plus élevé que le profil de température standard d'extrusion de polymère, et le profil de température de deuxième extrudeuse étant choisi pour être plus bas que le profil de température standard d'extrusion de polyester, et
la température de la filière à distributeurs multiples étant régulée de telle façon que l'au moins une couche de protection à base de polymère est chauffée à une première température de filière et l'au moins une couche de substrat à base de polyester est chauffée à une deuxième température de filière, ladite première température de filière étant choisie pour être plus élevée que la température standard de mise en œuvre de polymère, et la deuxième température de filière étant choisie pour être plus basse que la température standard de mise en œuvre de polyester,
l'adhérence entre l'au moins une couche de protection à base de polymère et l'au moins une couche de substrat à base de polyester, mesurée en N.m (lbf/in [livre force par pouce]) à 2,54 cm/min (1 in/min), est au moins 20 % plus élevée que si le profil de température de première extrudeuse est choisi pour correspondre au profil de température standard d'extrusion de polymère, et le profil de température de deuxième extrudeuse est choisi pour correspondre au profil de température standard d'extrusion de polyester, et la première température de filière est choisie pour correspondre à la température standard de mise en œuvre de polymère et la deuxième température de filière est choisie pour être identique à la température standard de mise en œuvre de polyester.

10. Procédé de fabrication de la structure composite multicouche selon la revendication 9, dans lequel le processus de coextrusion comprend en outre le passage de la structure composite multicouche par un ensemble de trois rouleaux refroidisseurs disposés à la sortie de la filière à distributeurs multiples de telle façon qu'un rouleau se situe en haut, un rouleau se situe au milieu et un rouleau se situe en bas et, lorsque la structure composite multicouche émerge de la filière à distributeurs multiples, ladite structure composite multicouche passe tout d'abord entre le rouleau du haut et le rouleau du milieu puis sous le rouleau du bas,
chacun des rouleaux étant réglé à une température différente, le rouleau du bas étant le plus chaud, le rouleau du milieu étant le plus froid, et le rouleau du haut étant à une température intermédiaire entre celle du rouleau du bas et celle du rouleau du milieu.

11. Procédé de fabrication de la structure composite multicouche selon la revendication 1, ledit procédé comprenant un moulage par compression de l'au moins une couche de protection à base de polymère et de l'au moins une couche de substrat à base de polyester l'une avec l'autre pour obtenir la structure composite multicouche, l'au moins une couche de protection à base de polymère ayant une température standard de mise en œuvre de polymère et l'au moins une couche de substrat ayant une température standard de mise en œuvre de polyester,
le moulage par compression comprenant les étapes consistant à :
1) fournir une presse de moulage par compression qui est thermorégulée,
2) mouler la couche de substrat à base de polyester dans la presse à la température standard de mise en œuvre de polyester,
3) laisser la couche de substrat à base de polyester dans la presse,
4) changer la température de la presse à une deuxième température,
5) mouler la couche de protection à base de polymère au-dessus de la couche de substrat à base de polyester à la deuxième température, ladite deuxième température étant choisie pour être plus élevée que la température standard de mise en œuvre de polymère,
moyennant quoi la couche de protection à base de polymère est collée à la couche de substrat à base de polyester de telle façon que ladite couche de protection à base de polymère ne se sépare pas de la couche de substrat à base de polyester quand la structure composite multicouche est pliée.

12. Procédé de thermoformage de la structure composite multicouche selon la revendication 1, dans lequel l'au moins une couche de protection à base de polymère a une température standard de mise en œuvre de polymère et l'au moins une couche de substrat à base de polyester a une température standard de mise en œuvre de polyester, le procédé comprenant les étapes consistant à :
1) fournir une thermoformeuse qui :
a. a au moins une étuve ayant au moins une température susceptible d'être réglée,
b. a au moins un moule mâle qui est mobile par rapport à une pièce en cours de thermoformage, et
c. a au moins un point de consigne de relâchement qui est changeable, ledit point de consigne de relâchement déterminant si la pièce à thermoformer est prête à thermoformer au moyen du moule mâle,
2) régler l'au moins une température d'étuve de la thermoformeuse à au moins 3,89 °C (25 °F) au-dessus de la température standard de mise en œuvre de polymère et au moins à la même température que la température standard de mise en œuvre de polyester,
3) régler le point de consigne de relâchement,
4) placer la structure composite multicouche dans l'étuve de la thermoformeuse en tournant la couche de protection à base de polymère vers le bas, et
5) agencer le moule mâle au-dessus de la structure composite multicouche ;
une fois le point de consigne de relâchement atteint, le moule mâle subissant une poussée vers le bas dans la structure composite multicouche,
la couche de protection à base de polymère étant amenée à coller à la couche de substrat à base de polyester de telle façon que la couche de protection à base de polymère ne se sépare pas de la couche de substrat à base de polyester quand la structure composite multicouche est pliée.

13. Article manufacturé comprenant la structure composite multicouche selon la revendication 1, l'article manufacturé étant un matériau de construction choisi dans le groupe constitué par les articles de revêtement, de toiture et de création de terrasses.

14. Article manufacturé comprenant la structure composite multicouche selon la revendication 1, ledit article manufacturé étant une pièce d'automobile choisie dans le groupe constitué par les revêtements de fond de benne de pickups, les phares et pièces extérieures d'automobiles.
